# EUROPÄISCHE PATENTSCHRIFT

(11) **EP 2 938 914 B1**
(45) Veröffentlichungstag und Bekanntmachung des Hinweises auf die Patenterteilung: **03.07.2019**
(21) Anmeldenummer: 13828777.6
(22) Anmeldetag: 26.12.2013
(51) Int. Cl.: F16L 17/10, F16J 15/46, F16L 55/162, E03F 3/06

(54) **VERFAHREN ZUM ABDICHTEN EINES ROHRLEITUNGSSYSTEMS ODER EINER WAND**
METHOD FOR SEALING OFF A PIPELINE SYSTEM OR A WALL
PROCÉDÉ POUR RENDRE ÉTANCHE UN SYSTÈME DE TUYAUTERIE OÙ UNE PAROI

(30) Priorität: 26.12.2012 DE 102012113089
(43) Veröffentlichungstag der Anmeldung: 04.11.2015
(73) Patentinhaber: Bohnet, Hans, 75328 Schömberg/Langenbrand (DE)
(72) Erfinder: EITEL, Jens, 75323 Wildbad (DE)
(74) Vertreter: Straub, Bernd
(86) Internationale Anmeldenummer: PCT/DE2013/100441
(87) Internationale Veröffentlichungsnummer: WO 2014/101916

(56) Entgegenhaltungen:
- EP-A1- 0 677 690
- EP-A2- 0 479 172
- DE-U1- 29 806 631
- DE-U1-202010 011 337

## Beschreibung

Die Erfindung betrifft ein Verfahren zum Abdichten eines Rohrleitungssystems, das gerade zur Abdichtung von begehbaren Rohrsystemen, wie sie in Abwasserkanälen verwendet werden können, geeignet ist. Die Erfindung betrifft auch ein Verfahren zur Abdichtung einer Wand.

Es sind verschiedene Techniken zur Abdichtung von Rohrleitungssystemen bekannt. Beispielsweise ist aus der DE 40 23 211 A1 bekannt, zur Abdichtung ein Rohr inwändig mit einer schlauchförmigen Folie mittels einer Umstülptechnik zu versehen und die vorab mit Klebstoff versehene schlauchförmige Folie mit der inwändigen Seite des Rohres zu verkleben. Dadurch entsteht ein folienartiger abdichtender Inlay im Inneren des Rohres.

Weiterhin ist aus dem deutschen Gebrauchsmuster G 85 01 676 U1 bekannt, einen Spalt zwischen zwei Rohren dadurch abzudichten, dass eine Dichtmanschette in Form eines Spannbandes von der Innenseite an die aneinander stoßenden Rohrenden, die einen Spalt bilden, gepresst wird. Die Abdichtung erfolgt bei diesem System zwischen der Innenseite der Rohre und der Dichtmanschette, indem die Dichtmanschette vollflächig an die Innenseite des Rohres im Bereich des abzudichtenden Spaltes gepresst wird. Dieses Verfahren erweist sich in der Anwendung als wenig flexibel und sehr aufwendig.

Weiterhin ist aus dem deutschen Gebrauchsmuster DE 2 95 190 73 U1 eine Dichtmanschette zum Einsetzen in Rohre zwecks Abdichtung von Leckstellen bekannt, die aus einem ringförmigen, zusammengebogenen, aufweitbaren Stahlblechband besteht. Die Enden dieses Stahlblechs sollen sich überlappen und werden mittels einer Arretierungsvorrichtung auseinandergespannt, was mithilfe eines Spannritzels so erfolgt, dass die Arretiervorrichtung das Band der Dichtmanschette an die Innenseite der Rohrleitung anpresst und dadurch abdichtet. Dieses Verfahren erweist sich in der Handhabung als sehr kostenintensiv und als sehr komplex.

Weiterhin ist aus dem deutschen Gebrauchsmuster DE 20 2010 011 337 U1 bekannt, einen fluiddichten Schlauch aus Gummi in einen abzudichtenden Spalt zwischen zwei Rohren eines Rohrleitungssystems einzubringen und den bisher ungefüllten Schlauch anschließend über ein Zuführelement mittels einer Pumpe mit einem Fluid zu füllen, so dass der Schlauch im Spalt sein Volumen vergrößert und an die Wandung des Spaltes dichtend anliegt. Der Druck wird so lange erhöht, bis ein ausreichendes Dichten im Spalt und damit des Rohrleitungssystems erreicht ist. Danach wird die Pumpe von dem Zuführelement getrennt, und das als Rückschlagventil ausgebildete Zuführelement verhindert das Ausströmen des Fluides im fluiddichten Schlauch. Dieses Verfahren erweist sich in der Handhabung für Ungeübte als verbesserbar.

Aus der Europäischen Patentanmeldung EP 0 677 690 A1 ist eine Muffenspiegeldichtung bekannt, die zur Abdichtung eines Stoßspaltes einer Muffe eine Mehrzahl von unterschiedlichen Dichtkomponenten zugleich und nebeneinander verwendet. Die Vielzahl der Dichtelemente greifen dabei in komplexer Weise ineinander und dichten jede für sich und gemeinsam den Spalt ab. Dabei werden zwei Hohlräume mit flüssigem Dichtmaterial gefüllt. Diese Muffenspiegeldichtung erweist sich als sehr komplex in der Handhabung und im Aufbau, einzelne Komponenten sind nicht geeignet, eine verlässliche und sichere Dichtung zu gewährleisten.

Der Erfindung liegt die Aufgabe zugrunde, ein Verfahren zum Abdichten eines Rohrleitungssystems mit einem fluiddichten Schlauch anzugeben, welches eine verlässliche Abdichtung eines Rohrleitungssystems im Bereich eines Spaltes oder eines Risses ermöglicht und dabei besonders einfach und sicher zu handhaben ist.

Diese Aufgabe wird durch ein Verfahren mit den Merkmalen des Anspruchs 1 gelöst.

Vorteilhafte Weiterbildungen des Verfahrens zur Abdichtung von Rohrleitungen eines Rohrleitungssystems sind Gegenstand der abhängigen Ansprüche.

Das erfindungsgemäße Verfahren zum Abdichten eines Rohrleitungssystems zeigt einen fluiddichten Schlauch, der zur Einbringung in den Bereich des abzudichtenden Spaltes bzw. Risses in einem Rohrleitungssystem vorgesehen ist. Der fluiddichte Schlauch zeigt eine Zuführöffnung, in die ein Fluid insbesondere Flüssigkeit eingebracht werden kann und eine Abführöffnung, aus der Fluid aus dem Inneren des Schlauches austreten kann. In einem ersten Schritt wird der fluiddichte Schlauch in einen Spalt zwischen zwei Rohren oder in einen Riss in einem Rohr des Rohrleitungssystems, der abgedichtet werden soll, eingebracht. Danach wird über eine im Schlauch angeordnete Zuführöffnung eine Flüssigkeit in den Schlauch eingebracht, so dass der Schlauch mit der Flüssigkeit so lange angefüllt wird, bis die Flüssigkeit über eine im Schlauch angeordnete Abführöffnung heraustritt. Dabei ist der Schlauch in dem Spalt oder Riss so angeordnet, dass diese Abführöffnung im Bereich des höchsten Punktes des Risses oder Spaltes angeordnet ist. Nun wird die Abführöffnung verschlossen, so dass ein weiteres Heraustreten der Flüssigkeit aus dem Schlauch verhindert wird. Wird nun der Innenraum des Schlauches weiter mit der Flüssigkeit durch die Fluidpumpe angefüllt, so presst sich der Schlauch dichtend an die Innenwand des Risses bzw. Spaltes und dichtet diesen vollflächig ab, so dass das Rohrleitungssystem im Bereich des Risses oder Spaltes verlässlich abgedichtet ist. Durch das beschriebene Vorsehen einer öffen- und verschließbaren Abführöffnung und das erfindungsgemäß beschriebene Verfahren gelingt es, eine sehr verlässliche und einfach zu handhabende Einbringung des Schlauches in den Riss bzw. Spalt zu gewährleisten und dadurch eine falsche Handhabung, z.B. durch Verdrehen oder das Verbleiben von unerwünscht vielem gasförmigen Fluid in den Schlauch vor der Einbringung in den Spalt oder Riss zu verhindern. Ist in dem Schlauch vor der Einbringung der Flüssigkeit eine relevante Menge an gasförmigem Fluid enthalten, lässt sich der Druck im Inneren durch die Komprimierbarkeit des Gases nicht in dem Maß steigern, dass eine sichere Abdichtung des Risses oder Spaltes gewährleistet ist. Erfindungsgemäß ist es nun mit Hilfe eines sehr einfach ausgebildeten Schlauches, der in der erfindungsgemäßen Verfahrensweise verwendet wird, möglich, einen Spalt oder Riss eines Rohrleitungssystems oder einer anderen Anordnung sicher zu abzudichten. Aufwendige, mehrkomponentige Abdichtsysteme insbesondere mit verschiedenen parallelen Dichtungen sind erfindungsgemäß nicht notwendig. Erfindungsgemäß genügt der Schlauch mit fakultativem Schutzring bei erfindungsgemäßer, verfahrensgemäßer Anwendung für ein verlässliches und dauerhaftes Abdichten. Dadurch ist eine einfache Handhabung gewährleistet.

Es hat sich als besonders vorteilhaft erwiesen, in der Zuführöffnung ein Ventil vorzusehen, das nach Beendigung der Zuführung der Flüssigkeit die Zuführöffnung abdichtet, so dass ein unerwünschtes Entweichen der Flüssigkeit über die Zuführöffnung verhindert werden kann. Vorzugsweise ist dieses Ventil als Rückschlagventil ausgebildet, das automatisch einen Fluss vom Inneren des Schlauches nach außen durch die Zuführöffnung verhindert. Neben diesem automatischen und komfortablen Rückschlagventil ist auch ein mechanischer Verschluss, z.B. durch Drehen eines Betätigungselementes, das ein Verschlusselement in die Zuführöffnung einführt und den Durchgang durch die Zuführöffnung verschließt, ebenso denkbar. Eine solche Realisierung der Zuführöffnung erweist sich als sehr robust. Darüber hinaus kann diese Zuführöffnung je nach Situation zielgerichtet in seinem Maß der Öffnung des Durchgangs variiert werden, insbesondere kann es zielgerichtet geöffnet oder geschlossen werden. Hierdurch sind sehr sichere und komfortable Realisierungen der Zuführöffnung und damit ein komfortables Verfahren zum Abdichten eines Rohrleitungssystems geschaffen. Fakultativ ist zusätzlich auch in der Abführöffnung ein entsprechendes Ventil, das gezielt geschlossen oder auch geöffnet werden kann, vorgesehen.

Als bevorzugte Ausbildung der Erfindung hat es sich bewährt, den Schlauch vor dem Einbringen in den Spalt oder Riss unter Unterdruck zu setzen und dadurch die Menge der im Schlauch befindlichen fluiden Stoffe zu reduzieren und bevorzugt weitgehend oder vollständig zu entfernen. Hierdurch gelingt es, das Volumen und insbesondere die laterale Ausdehnung des Schlauches vor dem Einbringen zu reduzieren, so dass es nun möglich ist, den Schlauch auch in einen besonders schmalen Spalt oder Riss einzubringen und im Laufe des weiteren Verfahrens sicher und komfortabel abzudichten.

Nach dem Einbringen des Schlauches in den Spalt oder Riss hat es sich als vorteilhaft erwiesen, den Schlauch zumindest partiell mit Gas zu befüllen und dadurch eine sichere Positionierung und Fixierung des Schlauches in dem abzudichtenden Riss oder Schlauch zu gewährleisten. Dabei wird Gas nur mit Luftdruck oder einem geringen Überdruck in den Schlauch über die Zuführöffnung eingebracht, wodurch keine aufwändigen Vorrichtungen vonnöten sind. Eine kleine Druckluftflasche, die auch an ungünstige Plätze eines abzudichtenden Rohrleitungssystems mitgenommen werden kann, genügt hierfür. Durch die sichere Positionierung und Fixierung kann auf einfache Weise in den weiteren erfindungsgemäßen Verfahrensschritten die Flüssigkeit zur sicheren Abdichtung eingebracht werden.

Während des Verfahrensschritts der Zuführung von Flüssigkeit, sei es vor oder nach dem Schließen der Abführöffnung, hat es sich als vorteilhaft erwiesen, den partiell mit Flüssigkeit gefüllten Schlauch zu entgasen, indem an der Abführöffnung ein Unterdruck angelegt wird und das Gas einschließlich des in der Flüssigkeit gelösten Gases partiell oder vollständig aus dem Schlauch entnommen wird. Dies wird dabei so gestaltet, dass der partiell mit Flüssigkeit gefüllte Schlauch in dem Spalt verbleibt und dadurch nicht durch zusätzliche Vorrichtungen in dem abzudichtenden Spalt gehalten werden muss. Bevorzugt wird das Entgasen bei einer weitgehenden Befüllung des Schlauches über 50 %, insbesondere über 75 %, mit Flüssigkeit vorgenommen, da hier durch die Masse der Flüssigkeit ein ausreichender Druck zur Positionierung und Fixierung des Schlauches im abzudichtenden Riss oder Spalt auf einfache und sichere Weise gegeben ist. Durch das Entgasen der Flüssigkeit insbesondere bei weitgehend oder ganz gefülltem Schlauch gelingt es, störende Gasblasen, die sich bei der Flüssigkeitsbefüllung gebildet haben oder auch erst im Laufe der Zeit nach der Befüllung bilden, zu reduzieren und dadurch eine sehr verlässliche Dichtwirkung auch bei geringen Flüssigkeitsdrucken insbesondere im Bereich von etwa 2 bar zu gewährleisten.

Nach einem anderen bevorzugten Verfahren wird der Schlauch vor dem Einbringen in den Spalt oder Riss partiell mit Gas angefüllt, so dass das Einbringen in den Riss oder Spalt ermöglicht wird, damit ein unerwünschtes Verdrehen oder Knicken oder Falten des Schlauches beim Einbringen in den Riss oder Spalt verhindert werden kann. Dadurch gelingt es, die Qualität des Einbringens des Schlauches in den Riss oder Spalt deutlich zu verbessern und dadurch das Abdichtergebnis wesentlich zu verbessern. Dabei ist eine Zuführung des Gases vorzugsweise über die Zuführöffnung vorgesehen, wobei auch alternativ eine Zuführung über die Abführöffnung möglich ist. Vorzugsweise wird dabei der Schlauch bei geschlossenen Öffnungen in den Spalt oder Riss eingebracht, was die Handhabung bei der Einbringung wesentlich erleichtert.

Es hat sich besonders bewährt, den Schlauch in den Riss oder Spalt so einzubringen, dass die Abführöffnung lagerichtig im Bereich des höchsten Punktes des Schlauches im Spalt oder Riss eingebracht wird. Dadurch können im Schlauch befindliche unerwünschte Fluide beim Einbringen der Flüssigkeit über die Zuführöffnung über die Abführöffnung entweichen. Dies erfolgt erfindungsgemäß in einer Weise, dass die unerwünschten Fluide, insbesondere gasförmige Fluide, vollständig oder weitgehend aus dem Innenraum des Schlauches über die Abführöffnung im Bereich des höchsten Punktes des Schlauches entweichen. Dabei erfolgt das Entweichen bevorzugt in den Innenraum des Rohres. Nach dem Schließen der Abführöffnung kann der erfindungsgemäß gewünschte Überdruck zur Abdichtung des Rohrleitungssystems in dem Schlauch verlässlich erzeugt werden, was die Bediensicherheit und die Qualität der Abdichtung wesentlich erhöht.

Darüber hinaus hat es sich als sehr vorteilhaft erwiesen, den Schlauch so auszubilden und so in den Spalt und Riss anzuordnen bzw. einzubringen, dass die Zuführöffnung im Bereich des tiefsten Punktes des Schlauches im Spalt angeordnet ist. Dadurch gelingt es, dass beim Einführen der Flüssigkeit über die tiefliegende Zuführöffnung die Flüssigkeit langsam ansteigt und die spezifisch leichteren unerwünschten Fluide im Schlauch nach oben verdrängen und über die Abführöffnung aus dem Inneren des Schlauches verdrängen. Es wird so lange Flüssigkeit zugeführt, bis über die im Bereich des höchsten Punktes des Schlauches im Spalt oder Riss angeordnete Abführöffnung Flüssigkeit austritt. Dadurch ist sichergestellt, dass sehr verlässlich und auf einfach zu handhabende Weise eine vollständige oder weitgehend vollständige Füllung mit der erwünschten Flüssigkeit des Schlauches zur Abdichtung erreicht ist. Die Zufuhr der Flüssigkeit erfolgt dabei vorzugsweise aus dem Innenraum des Rohres.

Als besonders vorteilhaft hat sich dabei erwiesen, einen ringförmig geschlossenen Schlauch vorzusehen, der in einem ringförmigen zu dichtenden Spalt zumindest weitgehend eingebracht werden kann und bei den gegenüberliegenden Anordnungen der Zuführöffnung und der Abführöffnung so gedreht in den ringförmigen Spalt eingebracht werden kann, dass die Abführöffnung oben und die Zuführöffnung unten im ringförmigen Spalt zum Liegen kommt. Durch diese Ausbildung des Schlauches lässt sich eine einfache und verlässliche Positionierung der Zu- und Abführöffnung auf einfache und sichere Weise schaffen. Zudem erfolgt der Anstieg der erwünschten, zugeführten Flüssigkeit in zwei Schenkeln zugleich, was die Geschwindigkeit des Anfüllens des Schlauches wesentlich erhöht. Dadurch wird die Handhabung zudem vereinfacht.

Daneben hat es sich für die Abdichtung eines Risses aber auch eines ringförmigen Spaltes oder Risses bewährt, einen linearen unverzweigten Schlauch vorzusehen, der bevorzugt im einen Endbereich die Zuführöffnung aufweist, während er weiterhin bevorzugt in dem anderen Endbereich die Abführöffnung zeigt. Je nach Länge des abzudichtenden Risses oder Spaltes wird der lineare Schlauch von einem Ende bis zum anderen Ende des linearen Risses oder Spaltes eingebracht, wobei bevorzugt die Zuführöffnung an der tieferen Position angeordnet ist und die Abführöffnung an der höheren Position zum Liegen kommt. Dadurch ist ein verlässliches Auffüllen des Schlauches mit Flüssigkeit gerade bei dem Vorhandensein einer Vorfüllung mittels Gas gewährleistet.

Bei geschlossenen, insbesondere ringförmigen Spalten wird der lineare, unverzweigte Schlauch mit seinen Enden entweder aneinanderstoßend oder überlappend in den Spalt eingebracht, so dass der mit Flüssigkeit gefüllte Schlauch den ganzen geschlossenen, insbesondere ringförmigen Spalt ausfüllt. Es hat sich dabei bevorzugt bewährt, die eine oder beide Zuführöffnungen mit einem Abstand zum Ende des linearen Schlauches anzuordnen und diesen Endbereich zwischen Ende des Schlauches und Zu- oder Abführöffnung überlappend mit dem anderen Ende in dem geschlossenen, insbesondere ringförmigen Spalt oder Riss anzuordnen, so dass beim Auffüllen des Schlauches mit der Flüssigkeit ein Fixieren des Überlappungsbereiches durch den aufgefüllten linearen Schlauch gegeben ist und dadurch ein Verrücken oder ein unerwünschtes nicht geschlossenes Abdichten des Spaltes verhindert ist. Eine lagerichtige Einbringung der Zuführöffnung am tiefsten Punkt des abzudichtenden Spaltes oder Risses bzw. für die Abführöffnung am höchsten Punkt ist aufgrund der linearen Ausbildung des Schlauches von geringer Bedeutung.

Zur Vermeidung von unerwünschten Undichtigkeiten durch ein Vorhandensein von Lücken im abzudichtenden Spalt oder Riss hat es sich gerade bei geschlossenen, insbesondere ringförmigen Spalten oder Rissen bewährt, den Schlauch nach Einbringen in den Spalt oder Riss zu einem geschlossenen Schlauch zu verbinden, was bevorzugt durch Vulkanisieren oder Verschweißen oder andere gängige Verbindungstechniken z.B. Verkleben gewährleistet wird. Durch dieses Anordnen des linearen Schlauches zu einem geschlossenen Schlauch ist eine besonders verlässliche Abdichtung geschaffen, die durch das dauerhafte Verbinden der Enden, insbesondere der überlappenden Enden des linearen Schlauches dauerhaft und sicher gewährleistet wird, ohne dass das Verfahren zum Abdichten eines Rohrleitungssystems unnötig kompliziert wird.

Eine weitere bevorzugte Ausbildung der Erfindung zeigt ein Verfahren, bei dem nach dem Einbringen des Schlauches in den Riss oder Spalt inwändig im Bereich des Risses oder Spaltes ein Schutzring angebracht wird, an den sich der Schlauch bei der Füllung mit Flüssigkeit anpresst und dadurch in den Riss oder Spalt gepresst oder in dem Riss oder Spalt gehalten wird und dabei insbesondere gegen den Schutzring zusätzlich dichtend wirkt. Vorzugsweise wird der Schutzring aus mehreren Stücken zusammengesetzt und bevorzugt so formfest ausgebildet, dass er dem Schlauch bei der Füllung einen mechanisch starken Widerstand entgegenbringt, so dass der Widerstand des Schutzringes den Schlauch beim Auffüllen radial nach außen auf oder in den Riss oder Spalt presst und dadurch eine sichere und verlässliche Abdichtung schafft. Dabei kann es vorkommen, dass der Schlauch nicht vollständig in dem Riss oder Spalt eingebracht wird und dadurch partiell oder vollständig in einem Bereich des Risses oder Spaltes aus diesem herausragt und den Zwischenraum zwischen Schutzring und Riss oder Spalt zumindest partiell ausfüllt. Durch das Widerlager des Schutzringes ist auch bei einer nicht vollständigen korrekten Einbringung des Schlauches in den Riss oder Spalt eine gute Abdichtung gewährleistet. Dadurch lassen sich Handhabungsfehler beim Einbringen des Schlauches in den Riss oder Spalt auf einfache und verlässliche Weise kompensieren. Darüber hinaus ist durch den Schutzring ein mechanischer Schutz des gefüllten abdichtenden Schlauches vor Beschädigungen gewährleistet, insbesondere durch im Rohrleitungssystem transportierte Stoffe, seien es spitze, kantige Feststoffe. Gegebenenfalls ist auch ein chemischer Schutz geschaffen, der bei einem den Schlauch vollständig fluiddicht umschließenden Schutzring eine Beschädigung durch aggressive Fluide, die im Rohrleitungssystem gefördert werden, verhindert. Dies schafft eine verbesserte dauerhafte Abdichtung des Rohrleitungssystems.

Nach einer weiteren bevorzugten Ausbildung des erfindungsgemäßen Verfahrens werden in dem Schutzring eine oder mehrere Öffnungen zum Befüllung und/oder Entnehmen eines Fluides aus dem Schlauch vorgesehen. Diese Öffnungen werden dabei so in dem Schutzring angeordnet und der Schutzring so inwändig in dem Rohrleitungssystem positioniert, dass die Öffnungen der Zuführöffnung und/oder Abführöffnung zugeordnet sind und dadurch ein Zugang zum Befüllen und/oder Entnehmen eines Fluides aus dem Schlauch auf einfache und verlässliche Weise geschaffen wird. Dadurch ist ein sehr sicheres Befüllen und/oder Entnehmen des Fluides geschaffen und bereits frühzeitig ein mechanischer und/oder chemischer Schutz des in den Riss oder Spalt eingebrachten Schlauches gegeben.

Nach einer weiteren bevorzugten Ausbildung des Verfahrens mit einem Schutzring mit einer oder mehreren Öffnungen hat es sich bewährt, einen oder mehrere Deckel zum Verschließen der einen oder mehreren Öffnungen vorzusehen. Nach der Befüllung des Schlauches mit Flüssigkeit, insbesondere nach Entfernen des Zuführungsschlauches, werden die eine oder die mehreren Öffnungen mit einem oder mehreren Deckeln verschlossen. Dadurch ist ein besonderes Maß an Dauerhaftigkeit der Abdichtung und eine gute Handhabbarkeit des Verfahrens geschaffen. Zusätzlich hat es sich bewährt, die Deckel nicht nur zum Verschließen, sondern auch für eine Wiederöffnung auszubilden. Durch diese Ausbildung gelingt es, insbesondere zu Wartungszwecken die Öffnungen wieder zu öffnen und z.B. die Flüssigkeit in dem Schlauch zu ergänzen oder auszutauschen. Gegebenenfalls ist es auch möglich, das gesamte System aus fluidgefülltem Schlauch und Schutzring Schritt für Schritt aus dem Rohrleitungssystem zu entnehmen. Dabei werden bevorzugt zuerst die Deckel entnommen, anschließend die Abführöffnung geöffnet und danach die Flüssigkeit über die bevorzugt tiefliegende Zuführöffnung, die zuvor geöffnet wurde, entnommen. Dies kann bevorzugt durch Abpumpen erfolgen, auch ein passives Auslaufen des Schlauches ist möglich und reduziert den Geräteaufwand. Im Folgenden wird der insbesondere mehrteilige Schutzring entfernt und der nun lockere flexible Schlauch aus dem Riss oder Spalt entfernt. Nun kann der Riss oder Spalt näher untersucht werden und eine erneute Abdichtung nach dem vorgenannten Verfahren mit neuen Komponenten oder mit den bisher verwendeten Komponenten vorgenommen werden. Durch diese Möglichkeit des Abdichtens eines Rohrleitungssystems und dem nachträglichen Entnehmen ist eine sehr gut handhabbare Vorgehensweise zur Handhabung von Dichtungsproblemen in Rohrleitungssystemen geschaffen.

Neben den vorgenannten Ausbildungen des erfindungsgemäßen Verfahrens hat es sich besonders bewährt, in dem Schlauch mehrere voneinander getrennte Kammern zur Aufnahme eines Fluides mit jeweiligen Zu- und Abführöffnungen vorzusehen. Die Kammern sind dabei bevorzugt entlang der Längsausdehnung des Schlauches, insbesondere über die gesamte Länge ausgebildet. Bei der Zuführung von Gas und/oder Flüssigkeiten in den Schlauch werden nun schrittweise oder parallel einzelne oder alle Kammern befüllt. Gerade durch das schrittweise Befüllen, insbesondere das partielle Befüllen der Kammern zuerst mit Gas, lässt sich die Handhabung des Verfahrens zur Abdichtung eines Rohrleitungssystems weiter vereinfachen, da es nun möglich ist, zuerst einen Teil der getrennten Kammern mit Gas zu befüllen und anschließend die anderen Kammern parallel oder schrittweise mit Flüssigkeit anzufüllen, bis diese ausreichend, insbesondere vollständig aufgefüllt sind. Erst danach werden dann die mit Gas gefüllten Kammern so mit Flüssigkeit aufgefüllt, dass zumindest partiell das Gas durch die Flüssigkeit ersetzt wird und eine vollständige oder weitgehende Flüssigkeitsfüllung des Schlauches gegeben ist und dadurch ein besonders verlässliches und sicheres Abdichten des Risses oder Spaltes geschaffen ist. Durch das Vorsehen von getrennten Zu- und Abführöffnungen für die getrennten Kammern, die entsprechend ihrer Funktion unterschiedlich ausgebildet sind und räumlich, strukturell oder farblich klar voneinander unterscheidbar sind, ist eine einfache Handhabung des Verfahrens trotz erhöhter Anzahl von Zu- und Abführöffnungen gegeben.

Eine weitere Ausbildung des erfindungsgemäßen Verfahrens sieht vor, in einem Schritt vor dem Einbringen des Schlauches in den Riss oder Spalt diesen zu glätten und dadurch Unebenheiten im Riss oder Spalt zu beseitigen, die unmittelbar oder über einen längeren Zeitraum den in den Riss oder Spalt eingebrachten Schlauch undicht machen und dadurch zerstören. Gerade bei der Abdichtung eines Risses, der eine ungeplante, quasi natürliche abzudichtende Fehlstelle darstellt, sind störende Unebenheiten besonders relevant.

Weiterhin hat es sich bewährt, neben dem Glätten den Spalt oder Riss so zu erweitern, dass der Schlauch verlässlich eingebracht werden kann. Vorzugsweise erfolgt dabei eine Erweiterung auf 2 oder mehr cm. Durch diese Glättung und/oder Erweiterung gelingt es, das beschriebene, erfindungsgemäße Verfahren sehr verlässlich auszugestalten.

Vorzugsweise wird als Flüssigkeit zum Befüllen des Schlauches eine inerte Flüssigkeit, die nicht zerstörend mit dem Schlauch in Wechselwirkung tritt, verwendet. Als bevorzugte inerte Flüssigkeit hat sich Wasser insbesondere destilliertes Wasser bewährt, da es den vorzugsweise aus gummielastischem Kunststoff bzw. Gummi insbesondere Kautschuk hergestellten Schlauch nicht chemisch angreift und in ausreichenden Mengen kostengünstig zur Verfügung steht und zudem einfach zu handhaben ist. Als bevorzugter Kautschuk wird Ethylen-Propylen-Dien-Kautschuk (Kurzzeichen EPDM, Ethylen-Propylen-Dien- Monomer) oder ein Polymerblend unter Verwendung von Ethylen-Propylen-Dien-Kautschuk und Polypropylen (Kurzzeichen PP-EPDM) aufgrund seiner Robustheit verwendet. PP-EPDM wird entweder vernetzt oder unvernetzt verwendet. Die gesteigerte Robustheit wird beim vernetzten PP-EPDM noch einmal gesteigert. Gerade durch die Verwendung von PP-EPDM wird es vorteilhaft möglich, auch Dimensionierungsänderungen zum Beispiel Änderungen des Rohrinnendurchmessers z.B. vom 1000 mm auf 900 mm dichtend überwindbar zu machen.

Dabei werden bevorzugt Materialstärken von etwa 0,5 bis 1 cm verwendet, wodurch die Robustheit des Schlauches und damit die Sicherheit des Verfahrens im besonderen Maß unterstützt werden. Zudem hat es sich als besonders geeignet erwiesen, den Schlauch im Bereich, der im eingebauten Zustand dem Rohrinnenraum zugewandt ist, mit einer dickeren, größeren Materialstärke als der restliche Schlauch zu versehen und dadurch die Robustheit bei genügender Flexibilität und damit Handhabbarkeit zu verbessern. In diesem Fall wird erfindungsgemäß bei der Einbringung der Schlauch orientierungsrichtig so in den Riss oder Spalt eingebracht, dass die gewünschte Seite des Schlauches die richtige Orientierung im Riss oder Spalt einnimmt. Beispielsweise kann der verstärkte Materialbereich so orientiert sein, dass er dem Rohrinnenraum zugewandt ist und dadurch im eingebauten Zustand den Schlauch insbesondere den fluidgefüllten Innenraum besonders vor Beschädigung, sei es durch mechanische Beschädigung oder durch chemische Beschädigung, schützt.

Weiterhin werden bevorzugt Materialhärten von etwa 55 Shore verwendet, was die Handhabbarkeit einerseits und die Robustheit in guter Weise gemeinsam sicherstellt.

Nach einem besonders bevorzugten, erfindungsgemäßen Verfahren ist in der Zuführöffnung und / oder in der Abführöffnung ein Ventil angeordnet, das abhängig vom Verfahrensschritt geöffnet oder geschlossen werden kann und das fluiddicht, insbesondere gasdicht, ausgebildet ist. Dies wird erfindungsgemäß dadurch erreicht, dass ein Ventil mit gummielastischem Dichtkugelsitz bzw. gummielastischer Dichtkugel verwendet wird, die gemeinsam die Dichtwirkung des Ventils gewährleisten. Erfindungsgemäß sind beide Ventilelemente nicht aus Metall gebildet, so dass auch bei geringen Drücken eine sichere, fluiddichte Abdichtung gewährleistet ist. Neben der Möglichkeit, eines der beiden genannten Ventilelemente aus gummielastischem Material auszubilden hat es sich besonders bewährt, nur eines aus gummielastischem Material auszubilden und das andere aus Metall, insbesondere aus Stahl auszubilden. Dadurch lässt sich die gewünschte äußere Form des metallischen Ventilelementes sehr genau gewährleisten und dadurch auch die gewünschte fluiddichte insbesondere gasdichte Abdichtung auch bei niedrigen Drücken sicherstellen.

Darüber hinaus hat es sich bewährt, insbesondere zusätzlich zu dem Ventil in der Zuführöffnung bzw. Abführöffnung eine abnehmbare Dichtkappe aufzubringen und damit sicherzustellen, dass kein Fluid insbesondere Gas aus dem Schlauch austreten oder in diesen eindringen kann und dadurch die Dichtwirkung des gefüllten Schlauches auf Dauer einschränken kann .

Es hat sich als besonders vorteilhaft erwiesen, das vorbeschriebene erfindungsgemäße Verfahren zum Abdichten eines Rohrleitungssystems in einem anderen Anwendungsbereich nämlich zur Abdichtung eines Spaltes oder Risses in einer Wand insbesondere zur Abdichtung einer Dehnfuge in einer Betonmauer oder Ähnlichem insbesondere einer Betonwand oder Betondecke oder einer Wand aus einem anderen entsprechenden Material einzusetzen. Hierbei werden die einzelnen vorbeschriebenen Verfahrensschritte in analoger Weise nicht zur Abdichtung eines Spaltes oder Risses in einem Rohrleitungssystem sondern in einer Wand angewendet. Das beschriebene Verfahren ist für alle Wände, insbesondere aufrechte, insbesondere senkrechte Wände, aber auch für horizontale Wände wie Decken oder Böden geeignet.

Als besonders vorteilhaft hat es sich erwiesen, dieses Verfahren bei der Abdichtung einer feuchten Wand zu verwenden. Hierbei wird die feuchte Wand mit einem Riss oder künstlich erzeugten, insbesondere horizontalen Spalt versehen und zur Verhinderung des Hindurchtretens von Feuchtigkeit vom Erdreich in die Wand oberhalb des Risses oder Spaltes mit Hilfe des erfindungsgemäßen Verfahrens abgedichtet. Hierbei dichtet der erfindungsgemäß eingebrachte Schlauch den Riss oder Spalt flüssigkeitsdicht und feuchtigkeitsdicht ab und trennt somit den Bereich der Wand oberhalb des abgedichteten Risses oder Spaltes von dem Bereich unterhalb des abgedichteten Risses oder Spaltes flüssigkeitsdicht und feuchtigkeitsdicht ab. Damit ist eine Trocknung des Bereiches der Wand oberhalb des abgedichteten Risses oder Spaltes ermöglicht.

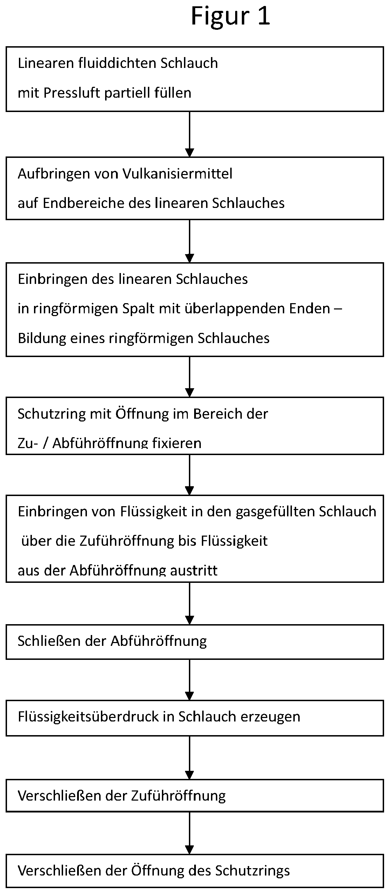

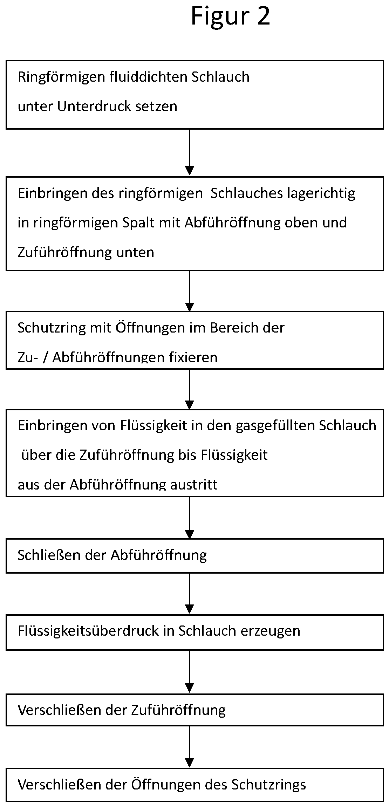

Im Folgenden wird das erfindungsgemäße Verfahren zur Abdichtung eines Rohrleitungssystems anhand zweier beispielhaft ausgewählten Folgen von Verfahrensschritten anhand der in der Figur 1 und 2 dargestellten Verfahrensabläufe erläutert.

Die Erfindung ist nicht auf den beispielhaft dargestellten Verfahrensablauf beschränkt.

Im Folgenden wird das beispielhafte Verfahren anhand der Figur 1 erläutert:
In einem ersten Schritt des ersten beispielhaften Verfahrens zum Abdichten eines Rohrleitungssystems mit einem fluiddichten, linearen Schlauch wird der Schlauch mit Pressluft nicht vollständig, also partiell angefüllt. Die Zuführung des Gases, das einfache Pressluft darstellt, erfolgt über eine Zuführöffnung, die beabstandet von dem einen Ende des linearen Schlauches angeordnet ist. Über die Abführöffnung, die ebenso beabstandet von dem anderen Ende des linearen Schlauches angeordnet ist, kann ein Fluid aus dem Inneren des Schlauches entweichen, solange die Abführöffnung geöffnet ist. Im Rahmen der Befüllung des Schlauches mit Gas wird diese Abführöffnung geschlossen, so dass die partielle Befüllung des Schlauches mit Pressluft ermöglicht ist.

In einem nächsten Schritt werden die beiden Endbereiche zwischen den Enden des Schlauches und der Zuführöffnung und Abführöffnung mit einem Vulkanisationsmittel beaufschlagt.

Anschließend wird der lineare Schlauch in den ringförmigen Spalt zwischen zwei Rohren des Rohrleitungssystems so eingebracht, dass der ringförmige Spalt vollständig von dem linearen Schlauch erfasst wird und ein Überlapp der beiden mit Vulkanisationsmittel beaufschlagten Enden entstanden ist, so dass eine Vulkanisierung und damit dauerhafte Verbindung der beiden Endbereiche des bisher linearen und nun durch die Vulkanisierung zu einem ringförmig geschlossenen Schlauch ermöglicht ist. Die Länge des Schlauches ist dabei so gewählt, dass der geschlossene ringförmige Schlauch möglichst vollständig in den ringförmigen Spalt eingebracht werden kann.

Nachfolgend wird der metallische Schutzring in dem Bereich des ringförmigen Spaltes auf der Innenwand des Rohrleitungssystems angebracht, indem die einzelnen Segmente des Schutzringes ineinander gesetzt und verspannt werden. Die Öffnung des Schutzringes wird dabei so positioniert, dass sie im Bereich der Zuführöffnung und der Abführöffnung zum Liegen kommt.

Im Folgenden wird über die Zuführöffnung des Schlauches eine Flüssigkeit in den Schlauch eingebracht. Dies erfolgt so lange, bis das Gas in dem Schlauch vollständig durch die Flüssigkeit ersetzt ist. Dies ist daran zu erkennen, dass an der Abführöffnung nicht mehr Gas, sondern die Flüssigkeit, die bevorzugt Wasser oder ein Öl insbesondere Silikonöl darstellt, heraustritt. Durch diese vollständige oder weitgehend vollständige Füllung wird es möglich, den Innendruck im Schlauch deutlich zu erhöhen und dadurch eine Volumenvergrößerung und ein sicheres Anpressen und damit sicheres Abdichten des durch Vulkanisation ringförmig geschlossenen Schlauches gegenüber der Innenwand des ringförmigen Spaltes zu ermöglichen.

Hierzu wird in einem nächsten Schritt die Abführöffnung so geschlossen, dass die heraustretende Flüssigkeit vollständig zurückgehalten wird.

Danach wird über die Zuführöffnung weiter Flüssigkeit in den Schlauch eingeführt und mittels einer Pumpe ein Überdruck in dem Schlauch erzeugt, der ein sicheres Anpressen des Schlauches an die Innenwand des Spaltes bzw. an den Schutzring gewährleistet. Durch das gemeinsame Anpressen des Schlauches des flüssigkeitsgefüllten Schlauches an den Schutzring und an die Innenwand des Spaltes ist eine sichere Positionierung des Schlauches in dem Spalt bzw. im Bereich des Spaltes gegeben, was zu einer dauerhaften und sicheren Abdichtung führt. Selbst wenn durch eine wenig sachgemäße Handhabung der Schlauch nicht vollständig in den Spalt eingebracht wurde, gelingt es durch das durch den Schutzring gebildete Widerlager den flüssigkeitsgefüllten Schlauch fest auf den Spalt oder partiell in den Spalt zu pressen und dadurch eine sichere Abdichtung auch in diesem Bereich des Spaltes zu gewährleisten.

Durch den erzeugten Überdruck, der insbesondere im Bereich von 1,5 bis 2 bar gewählt ist, ist eine ausreichende verlässliche Abdichtung und gute Handhabung gewährleistet. Bevorzugt wird dabei die Pumpe außerhalb des Rohrleitungssystems positioniert und die Flüssigkeit über eine Zuführleitung zu der Zuführöffnung geführt.

In einem nächsten Schritt wird die Zuführöffnung verschlossen, so dass der Überdruck im Inneren des flüssigkeitsgefüllten Schlauches dauerhaft erhalten bleibt. Der Verschluss kann beispielsweise auch durch ein Rückschlagventil geschaffen werden, welches ein Herausströmen der unter Überdruck stehenden Flüssigkeit verhindert. Alternativ kann auch ein mechanisches Verschlusselement den Durchgang der Zuführöffnung mechanisch verschließen.

Im Folgenden wird nun die Öffnung des Schutzringes, die den Zugang zu der Abführöffnung und Zuführöffnung ermöglicht, verschlossen, indem ein wieder öffenbarer Deckel in den Schutzring eingebracht wird.

Für Wartungsarbeiten lässt sich der Deckel wieder abheben und die Flüssigkeit in dem Schlauch überprüfen oder austauschen oder auch entnehmen. Im Falle des Entnehmens wird in einem ersten Schritt die Flüssigkeit in dem Schlauch vollständig oder partiell entnommen, so dass der Überdruck abgesenkt wird. Anschließend wird der Schutzring entfernt und der ausreichend von der Flüssigkeit entleerte Schlauch aus dem ringförmigen Spalt entnommen. Anschließend kann entweder ein neuer oder auch der überprüfte Schlauch wieder eingefügt werden.

Durch das beschriebene Verfahren zur Abdichtung eines Rohrleitungssystems mit einem fluiddichten Schlauch ist eine sehr verlässliche und einfache Vorgehensweise geschaffen, um ein Rohrleitungssystem mit Spalten oder Rissen abzudichten. Dabei hat es sich besonders bewährt, dass dieses Verfahren insbesondere zu Wartungszwecken reversibel ausgebildet ist.

Im Folgenden wird ein anderes beispielhaftes Verfahren anhand der Figur 2 erläutert, wobei, um Wiederholungen zu vermeiden, schwerpunktmäßig auf die Unterschiede zum Verfahren gemäß Figur 1 abgehoben wird:
In einem ersten Schritt des zweiten beispielhaften Verfahrens wird der ringförmige und fluiddichte Schlauch unter Unterdruck gesetzt, so dass möglicherweise im Innern des Schlauches befindliche Gase entnommen werden. Der Unterdruck wird in diesem Beispiel über eine an der Abführöffnung des Schlauches angebrachte Unterdruckleitung angelegt. Nach der Entnahme der möglicherweise vorhandenen Gase aus dem Inneren des Schlauches wird die Abführöffnung verschlossen und der Unterdruckschlauch abgenommen. Durch die Entnahme der möglicherweise vorhandenen Gase werden das Volumen und die laterale Ausdehnung des ringförmigen Schlauches reduziert, so dass ein Einbringen des Schlauches in den ringförmigen Spalt zwischen zwei Rohren des Rohrleitungssystems verlässlich und vereinfacht ermöglicht wird. Die Größe des ringförmigen Schlauches ist dabei entsprechend der Größe des ringförmigen Spaltes gewählt, so dass der Schlauch möglichst vollständig in dem ringförmigen Spalt eingebracht werden kann.

Das Einbringen des ringförmigen Schlauches erfolgt dabei in einer Weise, dass die Abführöffnung am höchsten Punkt oder zumindest im Bereich des höchsten Punktes des ringförmigen Spaltes angeordnet wird und die im Schlauch gegenüber angeordnete Zuführöffnung am tiefsten Punkt oder zumindest im Bereich des tiefsten Punktes des Spaltes angeordnet wird. Dadurch wird die Abführöffnung des Schlauches in einer 12-Uhr-Position im ringförmigen Spalt angeordnet und die Zuführöffnung in einer 6-Uhr-Position im ringförmigen Spalt angeordnet. Hierdurch ist ein sicheres und effizientes Befüllen des Schlauches und Entweichen aus dem Schlauch ermöglicht.

Je nach Bedarf kann zur besseren Fixierung des Schlauches im ringförmigen Spalt der eingebrachte Schlauch teilweise mit einem Fluid gefüllt werden, wodurch eine gewisse Klemmwirkung des ringförmigen Schlauches im ringförmigen Spalt erreicht wird. Dies wird insbesondere dadurch erreicht, dass die Zuführöffnung insbesondere das darin enthaltene Ventil geöffnet wird und dadurch Umgebungsluft in den Schlauch eindringen kann und diesen partiell befüllt. Nach Bedarf kann dies durch Anschließen einer unter Druck befindlichen Druckluftflasche unterstützt werden. Dabei wird eine nur so geringe Gasmenge in den Schlauch eingebracht, bis ein sicheres Verbleiben in dem abzudichtenden Riss oder Spalt gewährleistet ist und dadurch ein unerwünschtes Herausgleiten verhindert ist. Damit ist die Handhabung gerade im Hinblick auf die schwierigen äußeren Gegebenheiten bei der Abdichtung zum Beispiel eines Rohrsystems durch den Wegfall des Fixierens aufgrund der partiellen Gasbefüllung erfindungsgemäß verbessert.

Durch die Verwendung eines ringförmigen Schlauches, der an den ringförmigen Spalt angepasst ist, entfällt das Anpassen und Verbinden des Schlauches im Rohrleitungssystem, was die Handhabung während der Anwesenheit im Rohrinnenraum, der sehr beengt ist und regelmäßig dem Handwerker wenig Handlungsfreiheit lässt, vereinfacht.

Die folgenden Schritte entsprechend dem zu Figur 1 beschrieben Verfahren, wobei nun der Schutzring zwei getrennte Öffnungen, eine für die Zuführöffnung im Schlauch und eine für die Abführöffnung im Schlauch aufweist, die beide mit einem separaten Deckel verschlossen oder wieder geöffnet werden können.

Dieses zweite beispielhafte Verfahren erweist sich als sehr effizient und sicher in der Anwendung.

## Patentansprüche

1. Verfahren zum Abdichten eines Rohrleitungssystems oder zur Abdichtung eines Spaltes oder Risses in einer Wand mit einem fluiddichten Schlauch,
indem der fluiddichte Schlauch in einen bestehenden, abzudichtenden Spalt zwischen zwei Rohren oder in einen bestehenden, abzudichtenden Riss in einem Rohr des Rohrleitungssystems oder in einen bestehenden, abzudichtenden Spalt oder Riss in einer Wand, insbesondere in eine Dehnfuge in einer Betonmauer, eingebracht wird, anschließend über eine im Schlauch angeordnete Zuführöffnung eine Flüssigkeit in den Schlauch eingebracht wird, so dass der Schlauch mit der Flüssigkeit angefüllt wird, bis die Flüssigkeit über eine im Schlauch angeordnete Abführöffnung, welche im Bereich des höchsten Punktes des Schlauches im Spalt oder Riss angeordnet ist, heraustritt,
indem danach die Abführöffnung so verschlossen wird, dass die Flüssigkeit nicht weiter hindurchtritt,
und indem weiter Flüssigkeit in den Schlauch zugeführt wird, bis der Schlauch am Spalt oder Riss dichtend anliegt.

2. Verfahren nach Anspruch 1, wobei die Zuführöffnung ein Ventil enthält, das nach Beendigung der Zuführung der Flüssigkeit die Zuführöffnung abdichtet, so dass eine Trennung eines Zuführschlauch mit angeschossener Pumpe von der Zuführöffnung ermöglicht ist.

3. Verfahren nach Anspruch 1 oder 2, wobei zuerst der Schlauch partiell mit Gas angefüllt wird und dann bei geschlossener Abführöffnung der gasgefüllte Schlauch in den Spalt oder Riss eingebracht wird.

4. Verfahren nach Anspruch 1 oder 2, wobei zuerst der Schlauch unter Unterdruck gesetzt wird und dann bei geschlossener Abführöffnung in den Spalt oder Riss eingebracht wird.

5. Verfahren nach Anspruch 4, wobei nach dem Einbringen des Schlauches in den Spalt oder Riss der Schlauch zumindest partiell mit Gas gefüllt wird.

6. Verfahren nach einem oder mehreren der vorstehenden Ansprüche, wobei der Schlauch während oder nach dem Auffüllen mit Flüssigkeit ein oder mehrmals entgast wird.

7. Verfahren nach einem oder mehreren der vorstehenden Ansprüche, wobei der Schlauch so in den Spalt oder Riss eingebracht wird, dass die Abführöffnung lagerichtig im Bereich des höchsten Punktes des Schlauches im Spalt oder Riss insbesondere nicht verdreht eingebracht wird.

8. Verfahren nach einem oder mehreren der vorstehenden Ansprüche, wobei der Schlauch so in den Spalt oder Riss eingebracht wird, dass die Zuführöffnung im Bereich des tiefsten Punktes des Schlauches im Spalt oder Riss angeordnet ist.

9. Verfahren nach einem oder mehreren der vorstehenden Ansprüche, wobei der Schlauch einen linearen unverzweigten Schlauch darstellt.

10. Verfahren nach Anspruch 9, wobei der lineare Schlauch nach Einbringen in den Spalt oder Riss zu einem geschlossenen Schlauch insbesondere durch Vulkanisieren, Verkleben oder Verschweißen verbunden wird.

11. Verfahren zum Abdichten eines Rohrleitungssystems nach einem oder mehreren der vorstehenden Ansprüche, wobei nach Einbringen des Schlauches in den Riss oder Spalt inwändig im Bereich des Risses oder Spaltes ein Schutzring angebracht wird, an den sich der Schlauch bei der Füllung mit Flüssigkeit anpresst und dadurch in den Riss oder Spalt gepresst oder in dem Riss oder Spalt gehalten wird und dabei insbesondere gegen den Schutzring dichtend wirkt.

12. Verfahren zum Abdichten eines Rohrleitungssystems nach Anspruch 11, wobei der Schutzring eine oder mehrere Öffnungen zur Befüllung und/oder Entnahme eines Fluides aus dem Schlauch aufweist, die der Zuführöffnung und/oder Abführöffnung zugeordnet sind.

13. Verfahren zum Abdichten eines Rohrleitungssystems nach Anspruch 12, wobei eine oder mehrere Öffnungen nach Befüllung mit Flüssigkeit und insbesondere nach Entfernung des Zuführschlauches mit einem oder mehreren Deckeln, die insbesondere zu Wartungszwecken wieder öffenbar sind, verschlossen werden.

14. Verfahren nach einem oder mehreren der vorstehenden Ansprüche, wobei der Schlauch mehrere voneinander getrennte Kammern mit jeweiligen Zu- und Abführöffnungen aufweist, die partiell oder alle insbesondere hintereinander mit Gas und/oder mit Flüssigkeit angefüllt werden.

15. Verfahren nach einem oder mehreren der vorstehenden Ansprüche, wobei bei der Abdichtung eines Risses und/oder Spaltes in einem Rohrleitungssystem oder in einer Wand der Riss und/oder Spalt vor Einbringung des Schlauches geglättet und/oder erweitert wird.

16. Verfahren nach einem oder mehreren der vorstehenden Ansprüche, wobei als Flüssigkeit eine inerte Flüssigkeit insbesondere Wasser oder destilliertes Wasser verwendet wird.

17. Verfahren nach einem oder mehreren der vorstehenden Ansprüche, wobei als Ventil in der Zuführöffnung und/oder in der Abführöffnung ein Ventil mit einer nichtmetallischen und gummielastischen Dichtkugel und/oder mit einem nichtmetallischen und gummielastischen Dichtkugelsitz verwendet wird.

18. Verfahren nach einem oder mehreren der vorstehenden Ansprüche insbesondere nach Anspruch 17, wobei zur Abdichtung des Schlauches eine lösbare fluiddichte Kappe auf die Zuführöffnung und die Abführöffnung aufgebracht wird.

19. Verfahren nach einem oder mehreren der vorstehenden Ansprüche, wobei Flüssigkeit aus dem dichtenden Schlauch über die Abführöffnung entnommen wird , anschließend der Schlauch aus dem Spalt zwischen zwei Rohren oder aus dem Riss in einem Rohr des Rohrleitungssystems oder aus dem Spalt oder Riss in einer Wand entnommen wird und anschließend ein Verfahren nach einem der Ansprüche 1 bis 18 erneut durchgeführt wird.

## Claims

1. Method for sealing off a pipeline system or for sealing a gap or crack in a wall using a liquid-tight tube,
by the liquid-tight tube being introduced into an existing gap to be sealed between two pipes or into an existing crack to be sealed in a pipe of the pipeline system, or into an existing gap or crack in a wall to be sealed, in particular in an expansion joint in a concrete wall,
a liquid then being introduced into the tube via a supply opening arranged in the tube, such that the tube is filled with the liquid until the liquid emerges via a discharge opening which is arranged in the tube and is arranged in the region of the highest point of the tube in the gap or crack,
by the discharge opening being subsequently closed such that the liquid no longer emerges, and by liquid being further supplied into the tube until the tube sealingly rests against the gap or crack.

2. Method according to claim 1, wherein the supply opening contains a valve which seals the supply opening after the supply of liquid has ended, so that a supply tube having a connected pump can be isolated from the supply opening.

3. Method according to either claim 1 or claim 2, wherein, firstly, the tube is partially filled with gas and then, when the discharge opening is closed, the gas-filled tube is introduced into the gap or crack.

4. Method according to either claim 1 or claim 2, wherein, firstly, negative pressure is applied to the tube and then, when the discharge opening is closed, the tube is introduced into the gap or crack.

5. Method according to claim 4, wherein, after the tube has been introduced into the gap or crack, the tube is at least partially filled with gas.

6. Method according to one or more of the preceding claims, wherein, during or after being filled with liquid, the tube is vented once or several times.

7. Method according to one or more of the preceding claims, wherein the tube is introduced into the gap or crack such that the discharge opening is introduced in the correct position in the region of the highest point of the tube in the gap or crack, in particular is introduced so as to not be twisted.

8. Method according to one or more of the preceding claims, wherein the tube is introduced into the gap or crack such that the supply opening is arranged in the region of the lowest point of the tube in the gap or crack.

9. Method according to one or more of the preceding claims, wherein the tube is a linear, unbranched tube.

10. Method according to claim 9, wherein, after being introduced into the gap or crack, the linear tube is joined, in particular by vulcanization, gluing or welding, in order to form a closed tube.

11. Method for sealing off a pipeline system according to one or more of the preceding claims, wherein, after the tube has been introduced into the crack or gap, a protective ring is applied to the inner wall in the region of the crack or gap, against which protective ring the tube is pressed during the filling with liquid and, as a result, is pressed against the crack or gap or is held in the crack or gap and, in the process, acts sealingly in particular against the protective ring.

12. Method for sealing off a pipeline system according to claim 11, wherein the protective ring comprises one or more openings for filling and/or removing a liquid from the tube, which openings are assigned to the supply opening and/or the discharge opening.

13. Method for sealing off a pipeline system according to claim 12, wherein, after filling with liquid and in particular after removing the supply tube, one or more openings are closed by one or more covers, which can be opened again in particular for maintenance purposes.

14. Method according to one or more of the preceding claims, wherein the tube comprises a plurality of separate chambers having respective supply and discharge openings, some or all of which chambers can be filled, in particular one after the other, with gas and/or liquid.

15. Method according to one or more of the preceding claims, wherein, during the sealing of a crack and/or gap in a pipeline system or in a wall, the crack and/or gap is/are smoothed and/or widened before the tube is introduced.

16. Method according to one or more of the preceding claims, wherein an inert liquid, in particular water or distilled water, is used as the liquid.

17. Method according to one or more of the preceding claims, wherein a valve having a non-metallic and rubber-elastic sealing ball and/or having a non-metallic and rubber-elastic sealing-ball seat is used as the valve in the supply opening and/or in the discharge opening.

18. Method according to one or more of the preceding claims, in particular according to claim 17, wherein, in order to seal the tube, a detachable liquid-tight cap is attached to the supply opening and the discharge opening.

19. Method according to one or more of the preceding claims, wherein liquid is removed from the sealing tube via the discharge opening, then the tube is removed from the gap between two pipes or from the crack in a pipe of the pipeline system or from the gap or crack in a wall, and subsequently a method according to any of claims 1 to 18 is carried out again.

## Revendications

1. Procédé d'étanchéification d'un système de canalisations ou d'étanchéification d'une fente ou d'une fissure dans une paroi au moyen d'un tuyau étanche aux fluides, procédé dans lequel le tuyau étanche aux fluides est introduit dans une fente existante à étanchéifier située entre deux tubes ou dans une fissure existante à étanchéifier située dans un tube du système de canalisation ou dans une fente ou une fissure existante à étanchéifier située dans une paroi, en particulier dans un joint de dilatation situé dans un mur en béton,
puis un liquide est introduit dans le tuyau par une ouverture d'amenée ménagée dans le tuyau de sorte que le tuyau soit rempli du liquide jusqu'à ce que le liquide sorte par une ouverture d'évacuation disposée dans le tuyau et au niveau du point le plus élevé du tuyau dans la fente ou la fissure,
puis l'ouverture d'évacuation est fermée de sorte que le liquide cesse de sortir,
et du liquide est en outre amené dans le tuyau jusqu'à ce que le tuyau porte de manière étanche sur la fente ou la fissure.

2. Procédé selon la revendication 1, l'ouverture d'amenée comprenant une vanne qui, à la fin de l'amenée de liquide, ferme hermétiquement l'ouverture d'amenée de manière à permettre la séparation d'un tuyau d'amenée, auquel est raccordée une pompe, de l'ouverture d'amenée.

3. Procédé selon la revendication 1 ou 2, le tuyau étant tout d'abord partiellement rempli de gaz, puis le tuyau rempli de gaz étant introduit dans la fente ou la fissure lorsque l'ouverture d'évacuation est fermée.

4. Procédé selon la revendication 1 ou 2, le tuyau étant tout d'abord placé sous pression négative, puis introduit dans la fente ou la fissure lorsque l'ouverture d'évacuation est fermée.

5. Procédé selon la revendication 4, le tube étant au moins partiellement rempli de gaz après introduction du tuyau dans la fente ou la fissure.

6. Procédé selon au moins une des revendications précédentes, le tuyau étant dégazé une ou plusieurs fois pendant ou après le remplissage avec du liquide.

7. Procédé selon au moins une des revendications précédentes, le tuyau étant introduit dans la fente ou la fissure de sorte que l'ouverture d'évacuation soit introduite, en particulier sans rotation, à la position correcte au niveau du point le plus élevé du tuyau dans la fente ou la fissure.

8. Procédé selon au moins une des revendications précédentes, le tuyau étant introduit dans la fente ou la fissure de sorte que l'ouverture d'amenée soit disposée au niveau du point le plus bas du tuyau dans la fente ou la fissure.

9. Procédé selon au moins une des revendications précédentes, le tuyau étant un tuyau linéaire non ramifié.

10. Procédé selon la revendication 9, le tuyau linéaire étant relié à un tuyau fermé, notamment par vulcanisation, collage ou soudage, après introduction dans la fente ou la fissure.

11. Procédé d'étanchéification d'un système de canalisations selon au moins une des revendications précédentes, une bague de protection étant montée dans la zone de la fissure ou de la fente après introduction du tuyau dans la fissure ou la fente, bague de protection sur laquelle le tuyau appuie pendant le remplissage avec du liquide et est ainsi pressé dans la fissure ou la fente ou maintenu dans la fissure ou la fente et agit de manière étanche en particulier contre la bague de protection.

12. Procédé d'étanchéification d'un système de canalisations selon la revendication 11, la bague de protection comportant au moins une ouverture destinée au remplissage et/ou à l'élimination d'un fluide du tuyau, laquelle au moins une ouverture est associée à l'ouverture d'amenée et/ou à l'ouverture d'évacuation.

13. Procédé d'étanchéification d'un système de canalisations selon la revendication 12, au moins une ouverture est fermée avec au moins un capot, qui peut être à nouveau ouvert en particulier en vue de l'entretien, après le remplissage avec du liquide et en particulier après le retrait du tuyau d'amenée.

14. Procédé selon l'une au moins des revendications précédentes, le tuyau comprenant une pluralité de chambres séparées, pourvues d'ouvertures d'amenée et d'évacuation respectives, qui sont toutes ou en partie remplies, en particulier les unes après les autres, d'un gaz et/ou d'un liquide.

15. Procédé selon l'une au moins des revendications précédentes, la fissure et/ou la fente étant lissée et/ou élargie avant l'introduction du tube lors de l'étanchéification d'une fissure et/ou d'une fente dans un système de canalisations ou dans une paroi.

16. Procédé selon l'une au moins des revendications précédentes, un liquide inerte en particulier de l'eau ou de l'eau distillée étant utilisé comme liquide.

17. Procédé selon l'une au moins des revendications précédentes, une vanne pourvue d'une bille d'étanchéité non-métallique et élastique et/ou d'un siège de bille d'étanchéité non-métallique et élastique est utilisé comme vanne dans l'ouverture d'amenée et/ou dans l'ouverture d'évacuation.

18. Procédé selon l'une au moins des revendications précédentes, en particulier selon la revendication 17, un capuchon amovible étanche aux fluides étant monté sur l'ouverture d'amenée et l'ouverture d'évacuation pour étanchéifier le tuyau.

19. Procédé selon l'une au moins des revendications précédentes, du liquide étant retiré du tuyau d'étanchéité par l'ouverture d'évacuation, puis le tuyau étant retiré de la fente située entre deux tubes ou de la fissure située dans un tuyau du système de canalisations ou de la fente ou de la fissure située dans une paroi puis un procédé selon l'une des revendications 1 à 18 étant à nouveau mis en oeuvre.
